# EUROPEAN PATENT SPECIFICATION

(11) **EP 0 927 783 B1**
(45) Date of publication and mention of the grant of the patent: **25.09.2002**
(21) Application number: 98124743.0
(22) Date of filing: 28.12.1998
(51) Int. Cl.: D03D 49/00, F16F 15/04

(54) **Weaving loom suspension apt to increase the stability of the loom during operation**
Webstuhlaufhängung zur erhöhung der Stabilität des Webstuhles beim Betrieb
Suspension de métier à tisser pour augmenter la stabilité pendant son fonctionnement

(30) Priority: 31.12.1997 IT MI972904
(43) Date of publication of application: 07.07.1999
(73) Proprietor: Promatech S.p.A., 24020 Colzate (Bergamo) (IT)
(72) Inventor: Casarotto, Giuseppe, 24128 Bergamo (IT); Arrigoni, Massimo, 24100 Bergamo (IT)
(74) Representative: Vatti, Paolo, Dr. Ing.

(56) References cited:
- EP-A- 0 139 773
- EP-A- 0 379 679
- DE-A- 3 913 442
- DE-U- 8 533 713
- GB-A- 2 170 573

## Description

As known, a weaving loom is a machine characterized by the presence of dynamic forces transmitted by the main motors controlling the motion of the weft transport grippers, of the sley and of the weave machine connected to the loom. Such forces are of the alternate type and determine vibrations whose spectrum of frequency, and thus of specific energy, is quite significant for the stability of the machine and for the noise being produced. Besides the negative effect on the hygienic conditions of the working environment, there is also the negative influence of said vibrational energy on the resistance of the structure supporting the loom, whether it be a ground floor or an upper floor slab of a shed. In order to create a filter for the above mentioned dynamic disturbances-in compliance with the rules of environmental hygiene and to favour the structural resistance - it is necessary to take into account, besides the fundamental vibration frequency corresponding to the working periods of the loom, also the upper harmonic frequencies present in the noise produced by the actual loom.

For this purpose, a weaving loom - whose structure has a high degree of rigidity to guarantee the conditions of working precision of the mechanisms forming the same - is mounted, on the working site, onto supports apt to filter the dynamic forces transmitted to the ground. Such supports are of the mechanical type and they can consist of compressed air pads, elastomers characterized by a hysteresis loop, spring elements associated to distinct damping elements, and the like. The higher the efficiency of support and cut-off of the noise frequencies, the lower the frequency proper to the damping element. This condition is contrasted by a wider displacement range in the movements of the loom as a result of the application of the static loads.

The present invention covers the field of support systems for looms and concerns a suspension wherein the typical elastic and damping support elements are guided in their movement, so as to improve the stability of the machine due to elimination of the displacement range on a horizontal plane and thus of the shearing action associated to the transversal deformation of the support.

A support system for looms involves the connection to the ground of the feet provided at the base of the loom structure, since parts of the static load and of the system of forces of the dynamic load - corresponding to the forces transmitted by the control units of the sley, of the grippers and of the weave machines connected to the loom - act onto each of said feet.

The resultant of said loads develops, at the height of the foot, into the three orthogonal components in space.

Thanks to the elastic rigidity of each supporting foot, the dynamic system represented by the loom structure resting on the feet takes up a deformed configuration of static balance around which develops the vibration determined by the dynamic forces along the three orthogonal axes, with a damping factor which is a function not only of the level of the noise frequency in relation to the cut-off frequency of the damper, but also of the direction in which the vibration occurs.

Among the known loom support systems, reference can be made for example to the system adopted by SULZER and described in DE-U-8900312. Said support system comprises four rests in correspondence of the four basement feet, each foot being provided with helical springs having a free length of about 60 mm and being coupled with damping elements of the passive (elastomeric) or adjustable (oleodynamic or pneumatic) type. SULZER moreover adopt a similar system with air suspensions.

The horizontal component - parallel to the bearing surface - of the dynamic forces distributed in the machine, is generally transmitted to the ground, at foot level, through the elastic element, or else dampened, with the result of subjecting said element to shearing stress. Said stress produces a high flexure of the elastic element which is usually dimensioned to support an uniaxial load, and of the damping element whose damping efficiency is reduced in the presence of tangential stresses. With the addition of the destabilizing effect produced by a vibration on the horizontal plane. It should besides be noted that the ground floor or the slab of an upper floor of a building, planned to support vertical Loads, may quite easily react to the horizontal load through a membrane distribution of the effort, since the building structure is planned to contain the flexure deriving from transversal loads. It is thus important to create a loom support system apt to improve the damping efficiency of transversal loads, to the detriment of a full transmission (not dampened) of the horizontal load.

This is achieved by the present invention which supplies a weaving loom support system of the general type specified heretofore, but apt to eliminate the vibration of the loom on a horizontal plane, to urge the elastic and damping elements merely in the axial direction of utmost efficiency, and to transmit the horizontal load to the ground by means of an additional component, separate from the cited elements.

More exactly the invention concerns a suspension for weaving looms, of the type comprising one or more elastic elements and one or more damping elements interposed between the feet of the headpieces of the loom structure and the floor surface, characterized in that it also comprises, for each headpiece, a flat bar connecting a first foot of the headpiece to a portion of the floor surface aligned with said feet, the elastic and damping elements being interposed, in correspondence of said first foot, between said connecting bar and the floor surface.

According to a first preferred embodiment of the suspension, said connecting bar is fixed to a portion of the floor surface lying under the other foot of the headpiece, to which it connects said first foot, the elastic and damping elements being interposed, in correspondence of said other foot, between said connecting bar and the foot itself.

In an alternative embodiment, said connecting bar is rigidly fixed to a portion of the floor surface aligned with said feet and positioned symmetrically, in respect of the first foot, to the portion of the floor surface lying under the other foot, the elastic and damping elements being interposed, in correspondence of the other foot, between the floor surface and the foot itself.

Suitably, the end parts of said connecting bar form two widened abutments, one of said abutments cooperating with a flat element of the suspension fixed to the first foot of the headpiece, while the other abutment is rigidly fixed to the floor surface.

Preferably, said connecting bar is formed in one, fairly thin. flat piece; nevertheless, the two widened abutments forming its end parts may also be articulated in respect of its central part, either by way of rolling bearings with axis perpendicular to the plane of the headpiece, or by way of ball joints.

The main embodiment of the invention provides for said connecting bar to be positioned within the side play of each headpiece of the loom structure.

According to a second embodiment, said connecting bar is positioned externally to the side play of each headpiece of the loom structure.

The invention is now described in further detail, with reference to the accompanying drawings, which illustrate some preferred embodiments thereof, and in which:
Fig. 1 is an axonometric exploded view of a first embodiment of the suspension - with the loom structure to which it is applied - wherein the connecting bar is in one flat piece, and the elements of the suspension are in the form of plates of elastomeric material;
Fig. 2 is an axonometric exploded view, similar to that of fig. 1, wherein the elements of the suspension comprise a spring and a viscous type damper;
Fig. 3 is a diagrammatic view, on an enlarged scale, of one of the headpieces of the loom structure equipped with another embodiment of the suspension, wherein the end parts of the connecting bar are articulated in respect of its central part, and wherein the possible micromovements of the suspension and of the headpiece are clearly evidenced; and
Fig. 4 is an axonometric view of one of the headpieces of the loom structure equipped with a further embodiment of the suspension, wherein the connecting bar is positioned externally to the side play of the loom headpiece.

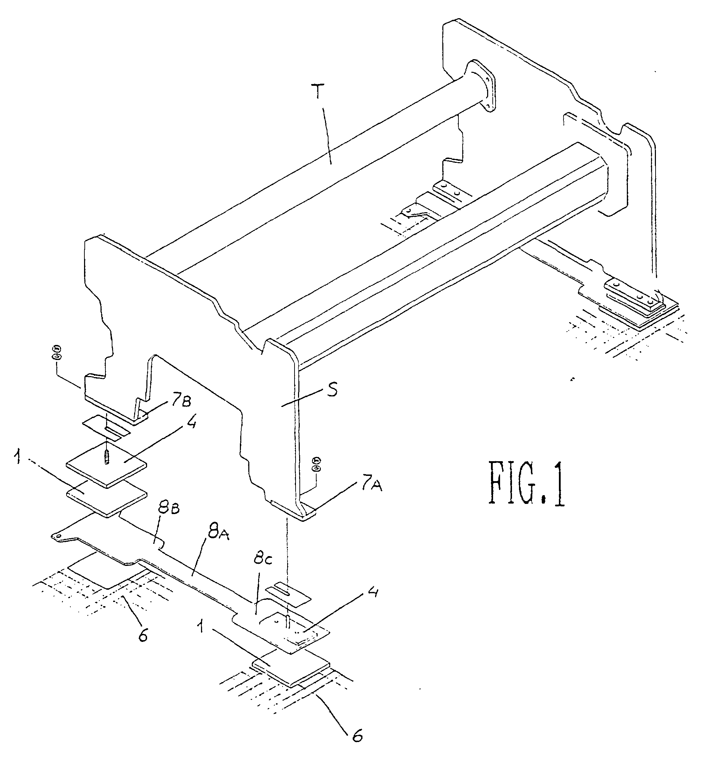

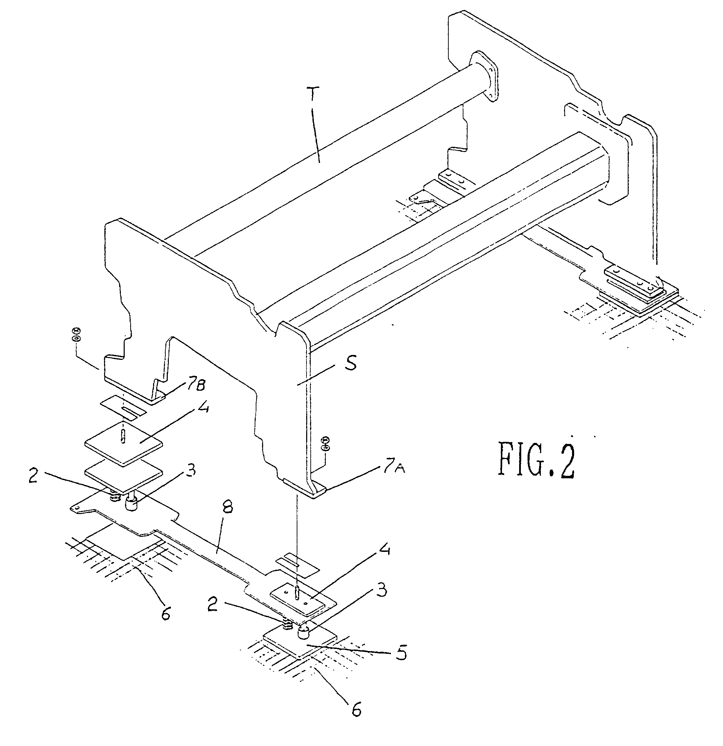

As shown on the drawings, the suspension according to the invention comprises one or more elastic elements, which may consist of an elastomer plate 1 (fig. 1), or of a metallic or compressed air spring 2 and one or more damping elements 3 of polymeric material or of the oleohydraulic type (fig. 2), said elastic and damping elements being interposed between two plates 4 and 5, apt to interconnect said elements and connect them to the foot 7 of the headpiece S of the loom structure T and, respectively, to the floor surface 6.

As mentioned in the introductory part of the description, there are already known to be suspensions having the general configuration described heretofore, whose connection to the loom headpiece S is obtained by cooperation of the plate 4 with the foot 7 through screw means.

Nevertheless, said solution is characterized by an instability on the horizontal plane, with the drawbacks deriving therefrom which have already been pointed out further above.

The suspension of the present invention allows to overcome such drawbacks - while improving the damping characteristics - by means of a flat connecting bar 8, the end parts of which are respectively interposed, in correspondence of a first foot 7A, between the elastic and damping elements (1 or 2 and 3) and said foot and, in correspondence of the other foot 7B, between the elastic and damping elements (1 or 2 and 3) and the floor surface 6, as shown in figs. 1 and 2 respectively.

According to a first embodiment (figs. 1 and 2), the connecting bar 8 is formed in one fairly thin flat piece. Said bar may vary in shape but should suitably comprise a narrow central part 8A and two widened end parts 8B and 8C, apt to form abutment surfaces cooperating with the other elements of the suspension.

In any case, the cross section area of the connecting bar 8 is in proportion with its length to the extent that its rigidity is neglectable on a vertical plane; thus, the joint formed by the coupling between the bar 8 and the damping elements for the feet 7 of the headpiece S is a dap joint on the horizontal plane and a hinge joint on the vertical plane. In practice, positive results can be obtained as far as loom stability, by adopting a connecting bar formed from a drawn iron sheet having a cross section of 100 x 10 mm and a length of 845 mm.

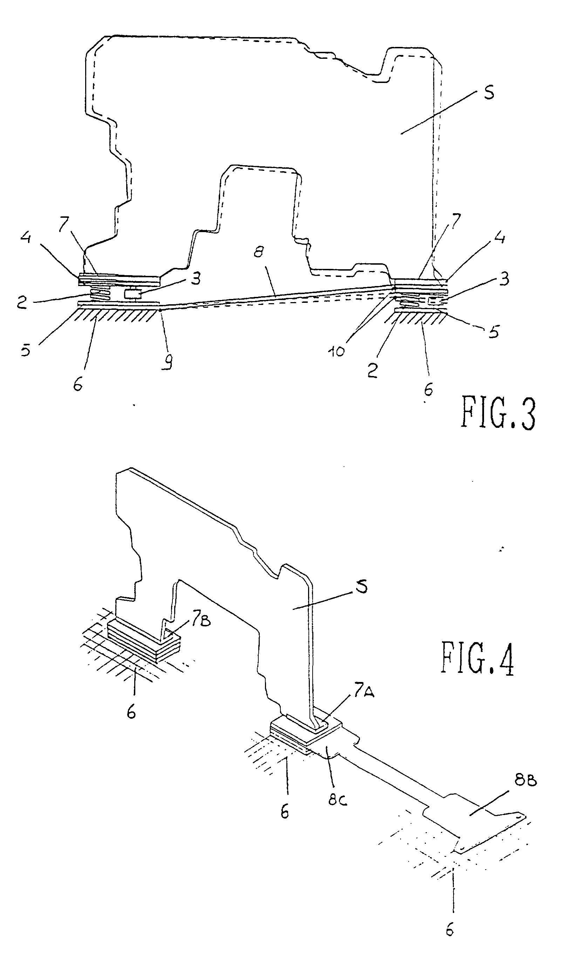

According to another embodiment, shown in fig. 3, the two widened end parts of the connecting bar 8 are articulated in respect of its central part, in correspondence of the points 9 and 10, either by way of rolling bearings with axis perpendicular to the plane of the headpiece S. or by way of ball joints. In each case the central part of the connecting bar 8 behaves like a coupling rod.

This type of construction allows to obtain a loom suspension with very special characteristics. As in fact diagrammatically illustrated in fig. 3, the particular arrangement adopted allows the system - in the presence of dynamic forces transmitted by the units of the machine - to perform microrotations about the fulcrum 9, in respect of the end part of the bar 8 fixed to the floor surface 6: thus, in correspondence of the fulcrum 10, the system is apt to move from a normal position (headpiece S in full lines) to a rotated position (headpiece S in dashed lines). This advantageously eliminates any loom vibrations on the horizontal plane parallel to the floor surface. As far as the horizontal load on the same plane, this is entirely transmitted - with no inconveniences - thanks to the elastic and damping elements, which are urged only in the axial direction of utmost efficiency.

Said possibility of rotation already guaranteed, in the first embodiment of the suspension, by the elasticity of the connecting bar 8 formed in one flat piece, is even more facilitated in the other embodiment described heretofore, wherein the flexural rigidity in correspondence of the widened end parts of said connecting bar 8 is reduced by adopting the rolling bearings or ball joints.

The important advantages of the suspension system according to the present invention also include its limited overall dimensions, its low cost and its easy setup. The particular development of the connecting bar 8 within the side play of the loom headpiece S, and the widened shape of its end parts cooperating with the rigid plates connected to the feet 7 of said headpiece, allow to use conventional means for fixing the machine to the floor surface.

According to an alternative embodiment, shown in fig. 4, the bar 8 is positioned externally to the side play of the loom headpiece S. In this case, the foot 7B of the headpiece S is anchored to the floor surface 6 in a conventional way, with the interposition of the elastic and damping elements of the suspension. Whereas, the bar 8 is connected with its widened end part 8C to the first foot 7A of the headpiece S, interposing the elastic and damping elements between said end part 8C and the floor surface 6, and the other end part 8B of the bar 8 is directly anchored to the floor surface 6, externally to the side play of the loom headpiece S and in alignment therewith. It is evident that the same results are obtained as in the previous embodiment, the only difference lying in the arrangement and in the geometry of the overall dimensions.

## Claims

1. Suspension for weaving looms, of the type comprising one or more elastic elements (1, 2) and one or more damping elements (3) interposed between the feet (7) of the headpieces (S) of the loom structure (T) and the floor surface (6), **characterized in that** it also comprises, for each headpiece (S), a flat bar (8) connecting a first foot (7A) of the headpiece (S) to a portion of the floor surface (6) aligned with said feet (7), the elastic and damping elements (1 or 2 and 3) being interposed, in correspondence of said first foot (7A), between said connecting bar (8) and the floor surface (6).

2. Suspension as in claim 1), wherein said bar (8) connects the first foot (7A) of the headpiece (S) to a portion of the floor surface (6) lying under the other foot (7B), the elastic and damping elements (1 or 2 and 3) being interposed, in correspondence of said other foot (7B), between said connecting bar (8) and the foot (7B) itself.

3. Suspension as in claim 1), wherein said bar (8) connects the first foot (7A) of the headpiece (S) to a portion of the floor surface (6) aligned with said feet (7) and positioned symmetrically, in respect of the first foot (7A), to the portion of the floor surface (6) lying under the other foot (7B), the elastic and damping elements (1 or 2 and 3) being interposed, in correspondence of said other foot (7B), between the floor surface (6) and the foot (7B) itself.

4. Suspension as in claims 1) to 3), wherein the end parts of said connecting bar (8) form two widened abutments (8B, 8C), one of said abutments (8C) cooperating with a flat element (4) of the suspension fixed to the first foot (7A) of the headpiece (S), while the other abutment (8B) is rigidly fixed to the floor surface (6).

5. Suspension as in claims 1), 2) and 4), wherein said connecting bar (8) is positioned within the side play of the headpiece (S) of the loom structure (T).

6. Suspension as in claims 1), 3) and 4), wherein said connecting bar (8) is positioned externally to the side play of the headpiece (S) of the loom structure (T).

7. Suspension as in claims 1) to 6), wherein said connecting bar (8) is formed in one, fairly thin, flat piece.

8. Suspension as in claim 5), wherein the two widened abutments (8B, 8C) forming the end parts of said connecting bar (8) are articulated in respect of its central part (8A).

9. Suspension as in claim 8), wherein the end parts of said connecting bar (8) are articulated (in 9 and 10) in respect of its central part by way of rolling bearings, with axis perpendicular to the plane of the headpiece (S).

10. Suspension as in claim 8), wherein the end parts of said connecting bar (8) are articulated (in 9 and 10) in respect of its central part by way of ball joints.

## Patentansprüche

1. Aufhängung für Webstühle, von der Art mit einem oder mehreren elastischen Elementen (1, 2) und einem oder mehreren Dämpfungselementen (3), die zwischen dem Fuß (7) der Kopfstücke (S) des Aufbaus des Webstuhls (T) und der Bodenfläche (6) angeordnet sind, **dadurch gekennzeichnet, dass** sie weiter für jedes Kopfstück (S) eine flache Strebe (8), die einen ersten Fuß (7A) des Kopfstücks (S) mit einem Abschnitt des Kopfstücks (6) verbindet, die mit dem ersten Fuß (7) ausgerichtet ist, aufweist, wobei die elastischen Elemente und die Dämpfungselemente (1 oder 2 und 3) in Übereinstimmung mit dem ersten Fuß (7A) zwischen der Verbindungsstrebe (8) und der Bodenfläche (6) angeordnet ist.

2. Aufhängung nach Anspruch 1, wobei die Strebe (8) den ersten Fuß (7A) des Kopfstücks (S) mit einem Abschnitt der Bodenfläche (6), die unter dem anderen Fuß (7B) liegt, verbindet, wobei die elastischen Elemente und die Dämpfungselemente (1 oder 2 und 3) in Entsprechung mit dem anderen Fuß (7B) zwischen der Verbindungstrebe (8) und dem Fuß (7B) selbst angeordnet ist.

3. Aufhängung nach Anspruch 1, wobei die Strebe (8) den ersten Fuß (7A) des Kopfstücks (S) mit einem Abschnitt der Bodenfläche (6) verbindet, die mit dem Fuß (7) ausgerichtet ist und in Bezug auf den ersten Fuß (7A) symmetrisch positioniert ist zu dem Abschnitt der Bodenfläche (6), die unter dem anderen Fuß (7B) liegt, wobei die elastischen Elemente und die Dämpfungselemente (1 oder 2 und 3) in Übereinstimmung mit dem anderen Fuß (7B) zwischen der Bodenfläche (6) und dem Fuß (7B) selbst angeordnet ist.

4. Aufhängung nach den Ansprüchen 1 bis 3, wobei die Endabschnitte der Verbindungsstrebe (8) zwei aufgeweitete Strebenköpfe (8B, 8C) bildet, von denen ein Strebenkopf (8C) mit einem flachen Element (4) der Aufhängung zusammenwirkt, die an dem ersten Fuß (7A) des Kopfstücks (8) befestigt ist, während der andere Strebenkopf (8B) fest mit der Bodenfläche (6) verbunden ist.

5. Aufhängung nach den Ansprüchen 1, 2 und 4, wobei die Verbindungsstrebe (8) innerhalb des seitlichen Spiels des Kopfstücks (S) des Webmaschinenaufbaus (T) positioniert ist.

6. Aufhängung nach den Ansprüchen 1, 3 und 4, wobei die Verbindungsstrebe (8) außerhalb des seitlichen Spiels des Kopfstücks (S) des Webmaschinenaufbaus (T) positioniert ist.

7. Aufhängung nach den Ansprüchen 1 bis 6, wobei die Verbindungsstrebe (8) zu einem relativ dünnen, flachen Stück ausgeformt ist.

8. Aufhängung nach Anspruch 5, wobei die beiden aufgeweiteten Strebenköpfe (8B, 8C), die die Endteile der Verbindungsstrebe (8) bilden, in Bezug auf ihren mittleren Teil (8A) gelenkig ausgebildet sind.

9. Aufhängung nach Anspruch 8, wobei die Endteile der Verbindungsstrebe (8) in Bezug auf ihren mittleren-Teil mittels Wälzlagern angelenkt sind (in 9 und 10), wobei die Achsen senkrecht zu der Ebene des Kopfstücks (6) liegen.

10. Aufhängung nach Anspruch 8, wobei die Endteile der Verbindungsstrebe (8) in Bezug auf ihren mittleren Teil mittels Kugelgelenken angelenkt sind.

## Revendications

1. Suspension pour métiers à tisser, du type comprenant un ou plusieurs éléments élastiques (1, 2) et un ou plusieurs éléments amortisseurs (3) intercalés entre les pieds (7) des pièces de tête (S) de la structure de métier (T) et la surface du sol (6), **caractérisée en ce qu'**elle comprend également, pour chaque pièce de tête (S), une barre plate (8) reliant un premier pied (7A) de la pièce de tête (S) à une partie de la surface du sol (6) alignée avec lesdits pieds (7), les éléments élastiques et amortisseurs (1 ou 2 et 3) étant intercalés, en correspondance dudit premier pied (7A) entre ladite barre de connexion (8) et la surface du sol (6).

2. Suspension selon la revendication 1, dans laquelle ladite barre (8) relie le premier pied (7A) de la pièce de tête (S) à une partie de la surface du sol (6) se situant sous l'autre pied (7B), les éléments élastiques et amortisseurs (1 ou 2 et 3) étant intercalés, en correspondance dudit autre pied (7B) entre ladite barre de connexion (8) et le pied (7B) même.

3. Suspension selon la revendication 1, dans laquelle ladite barre (8) relie le premier pied (7A) de la pièce de tête (S) à une partie de la surface du sol (6) alignée avec lesdits pieds (7) et positionnée symétriquement, par rapport au premier pied (7A), à la partie de la surface du sol (6) se situant sous l'autre pied (7B), les éléments élastiques et amortisseurs (1 ou 2 et 3) étant intercalés, en correspondance dudit autre pied (7B) entre la surface du sol (6) et le pied (7B) même.

4. Suspension selon les revendications 1 à 3, dans laquelle les parties d'extrémité de ladite barre de connexion (8) forment deux butées élargies (8B, 8C), l'une desdites butées (8C) coopérant avec un élément plat (4) de la suspension fixé au premier pied (7A) de la pièce de tête (S), tandis que l'autre butée (8B) est fixée rigidement à la surface du sol (6).

5. Suspension selon les revendications 1, 2 et 4, dans laquelle ladite barre de connexion (8) est positionnée dans le jeu latéral de la pièce de tête (S) de la structure de métier (T).

6. Suspension selon les revendications 1, 3 et 4, dans laquelle ladite barre de connexion (8) est positionnée extérieurement au jeu latéral de la pièce de tête (S) de la structure de métier (T).

7. Suspension selon les revendications 1 à 6, dans laquelle ladite barre de connexion (8) est formée en une pièce plate, relativement mince.

8. Suspension selon la revendication 5, dans laquelle les deux butées élargies (8B, 8C) formant les parties d'extrémité de ladite barre de connexion (8) sont articulées par rapport à la partie centrale (8A) de la barre.

9. Suspension selon la revendication 8, dans laquelle les parties d'extrémité de ladite barre de connexion (8) sont articulées (en 9 et 10) par rapport à la partie centrale de la barre au moyen de roulements, à axe perpendiculaire au plan de la pièce de tête (S).

10. Suspension selon la revendication 8, dans laquelle les parties d'extrémité de ladite barre de connexion (8) sont articulées (en 9 et 10) par rapport à la partie centrale de la barre au moyen de joints à rotule.
